(19) **Europäisches Patentamt**

**European Patent Office**

**Office européen des brevets**

(11) **EP 1 533 284 A1**

(12) **EUROPEAN PATENT APPLICATION**
published in accordance with Art. 158(3) EPC

(43) Date of publication:
25.05.2005 Bulletin 2005/21

(51) Int Cl.⁷: **C03B 37/12**, C03C 13/04

(21) Application number: 03741325.9

(22) Date of filing: **10.07.2003**

(86) International application number:
**PCT/JP2003/008788**

(87) International publication number:
**WO 2004/007383 (22.01.2004 Gazette 2004/04)**

(84) Designated Contracting States:
**DE FR IT**

(30) Priority: **10.07.2002 JP 2002201795**

(71) Applicant: **SUMITOMO ELECTRIC INDUSTRIES, Ltd**
**Osaka-shi, Osaka 541-0041 (JP)**

(72) Inventors:
• **NAGAYAMA, Katsuya**
**Yokohama-shi, Kanagawa 233-0015 (JP)**
• **MORITA, K.**
**Yokohama Wrks of Sumitomo El. Ind. Ltd.**
**Yokohama-shi, Kanagawa 244-8588 (JP)**

(74) Representative: **HOFFMANN EITLE**
**Arabellastrasse 4**
**81925 München (DE)**

(54) **OPTICAL FIBER AND A METHOD FOR MANUFACTUIRNG SAME**

(57)     There is prepared an optical fiber preform 2 whose core region is doped with Ge in such a quantity of dopant that the relative refractive-index difference [Ge] expressed in % with respect to pure $SiO_2$ satisfies the condition [Ge]$\geq$0.3%, where upon after being heat drawn with a drawing furnace 11 into an optical fiber 3, the optical fiber 3 is annealed in a heating furnace 21 downstream of the drawing furnace 11 under a condition that the cooling speed is 2000°C/second or less, and the period of annealing time is equal to or longer than the relaxation time. Further, the annealed optical fiber 3 is introduced into a cooling means 31 at an entry temperature of 700°C or more, and the optical fiber 3 is forcibly cooled by the cooling means 31. As a consequence, there are achieved an optical fiber and a method of fabricating the same capable of fabricating the optical fiber having a reduced Rayleigh scattering loss as well as excellent hydrogen-resisting property with favorably high productivity.

**Fig.1**

## Description

## Technical field

The present invention relates to an optical fiber for transmitting light with a low transmission loss and a fabricating method of fabricating the same.

## Background Art

In the transmission of light using an optical fiber, there becomes problematic the transmission loss such as Rayleigh scattering loss caused by Rayleigh scattering within the optical fiber or transmission loss caused by the structural imperfection within an optical fiber. To overcome those shortcomings, there have been proposed optical fibers capable of reducing the transmission loss and methods of fabricating the same.

For example, in a document "Sakaguchi; IEICE Journal 2000/1 Vol.J83-C No.1, pp. 30-36", it is disclosed that, by annealing the drawn optical fiber, the Rayleigh scattering loss in the optical fiber can be reduced. That is, the Rayleigh scattering strength within a glass is not constantly fixed depending on materials but depends on the fictive temperature Tf, which is a virtual temperature indicating the randomness in the state of arrangement of atoms within glass. Specifically, Rayleigh scattering strength increases, as the fictive temperature Tf within a glass is higher (randomness is higher).

In this regard, when heating and drawing an optical fiber preform, a heating furnace is disposed downstream of a drawing furnace such that the drawn optical fiber falls within a predetermined temperature range when passing through the heating furnace so as to anneal the drawn optical fiber. As a consequence, the annealing of the optical fiber prevents the drawn optical fiber from cooling drastically, whereby the optical fiber is cooled gradually. Here due to the structural relaxation of glass by rearrangement of atoms, the fictive temperature Tf within the optical fiber decreases whereby Rayleigh scattering strength within the optical fiber is suppressed.

As described above, the Rayleigh scattering loss in the optical fiber can be reduced by annealing the drawn optical fiber using a heating furnace disposed downstream of the drawing furnace. On the other hand, in addition to the Rayleigh scattering loss, it is known that, in an optical fiber with Ge (germanium) added to the core thereof, there occurs an increase in a peak of loss over a wide range at wavelength of $0.63\mu m$ due to a defect resulting from Ge.

The loss at a wavelength of $0.63\mu m$ as described above is caused by Si-O defect or a defect within the optical fiber such as nonbridged oxygen hole center (NBOHC) (for example, refer to a document "Hanafusa; Ceramics 21 (1986) No. 9, pp. 860-868"). Further, these defects within the optical fiber appear as Si-O-H in hydrogen atmosphere, thereby causing the peak of loss due to OH group at a wavelength of $1.38\mu m$ to increase. In Japanese Patent Application Laid-Open No. S60-186430, it is disclosed that, by annealing the drawn optical fiber at the temperature of 600°C or more, the above-mentioned loss at a wavelength of $0.63\mu m$ is to be reduced.

## Disclosure of the Invention

For the purpose of fabricating an optical fiber having a reduced Rayleigh scattering loss as well as excellent hydrogen-resisting property, there is a need to anneal the drawn optical fiber at a high temperature so as to lower the fictive temperature Tf, resulting in reduced Rayleigh scattering loss, and furthermore annealing the optical fiber at a medium temperature so as to reduce the defects in the optical fiber, resulting in decreased loss at a wavelength of $0.63\mu m$. Here, the statement "excellent hydrogen-resisting property" implies that, even in a hydrogen atmosphere, there occurs no increase in the peak of loss at a wavelength of $1.38\mu m$ due to the OH group.

However, when the optical fiber is annealed in such wide temperature range, there is required a considerably long heating furnace for annealing. Accordingly, there arises such problem that the drawing apparatus including drawing furnace and heating furnace becomes large-sized. Additionally, the line speed of the optical fiber during the drawing has to be set to a low speed for annealing. Accordingly, the throughput of the optical fiber is reduced.

The present invention has been made to solve the above-mentioned problems. An object of the present invention is to provide an optical fiber having a reduced Rayleigh scattering loss as well as excellent hydrogen-resisting property, and furthermore method fabricating the same excellent in a favorably high productivity of the optical fiber.

In order to achieve the above object, a method of fabricating an optical fiber in accordance with the present invention comprises:(1) a drawing step wherein an optical fiber preform having a core region and a cladding region formed on the periphery of the core region is heated and drawn with a drawing furnace into an optical fiber;(2) a heat treatment step wherein the optical fiber drawn with the drawing furnace is annealed by a heating furnace disposed downstream of the drawing furnace; and (3) a cooling step wherein the optical fiber annealed with the heating furnace is introduced with a temperature of fiber at 700°C or more into cooling means disposed downstream of the heating furnace, and is cooled forcibly by the cooling means, and (4) wherein in the course of the heat treatment step, the optical fiber is annealed on such annealing conditions that meet the requirements that the cooling speed of the optical fiber is to be 2000°C/second or less, and that the period of annealing time L/Vf is equal to or longer than the relaxation time τ, the length of the heating furnace being designated as L (m), the line speed of the optical fiber being designated as Vf (m/second), the viscosity of the optical fiber at the entrance of the heating furnace being designated as ηS (Pa·second), the tension of the optical fiber per a unit cross sectional area being designated as K (Pa), and the relaxation time thereof being defined as τ=ηS/K.

In the above-described fabricating method of an optical fiber, a heating furnace is disposed downstream of the drawing furnace, when an optical fiber preform is heated and drawn. At the time when the drawn optical fiber passes through the heating furnace, the optical fiber is annealed such that the cooling speed and the period of annealing time of the optical fiber meet a predetermined condition respectively. Thus, by cooling gradually the optical fiber using the heating furnace, the fictive temperature Tf in the optical fiber can be lowered and the Rayleigh scattering loss in the optical fiber can be reduced.

Also, for the annealed optical fiber, cooling means is further disposed downstream of the heating furnace, and the optical fiber is forcibly cooled by the cooling means. By means of this arrangement, the length of the drawing apparatus is reduced; and thus, the drawing apparatus can be made more small-sized as a whole. Further, the line speed of the optical fiber during the drawing can be increased; and thus, the optical fiber can be fabricated efficiently.

For the sake of the forced cooling of the optical fiber by the cooling means, the entry temperature of the optical fiber on being introduced into the cooling means is to be set to a temperature of 700°C or more. As a consequence, it is made possible to reduce the Si-O defect and defects such as NBOHC causing the loss at a wavelength of 0.63μm and the loss at a wavelength of 1.38μm due to the degradation of the hydrogen-resisting property to increase. Such being the case, the Rayleigh scattering loss is reduced; and thus, there can be fabricated the optical fiber having an excellent hydrogen-resisting property with favorably high productivity.

Here, in the heat treatment step, it is preferred that the optical fiber is annealed by setting the furnace temperature of the heating furnace to a predetermined temperature within a range of 800°C or more to 1600°C or less. And further, it is further preferred to anneal the optical fiber by setting the furnace temperature of the heating furnace to a predetermined temperature within a range of 1100°C or more to 1600°C or less. As a consequence, the Rayleigh scattering loss in the optical fiber can be sufficiently reduced.

An optical fiber in accordance with the present invention comprises (1) a core region and a cladding region formed on the periphery of the core region, wherein the core region is doped with Ge in such a quantity of dopant that relative refractive-index difference [Ge] expressed by % with respect to pure $SiO_2$ satisfies a condition [Ge]≥0.3%, (2) the Rayleigh scattering coefficient

A (dB/km·μm⁴) and the transmission loss $α_{1.00}$ (dB/km) at a wavelength of 1.00μm exhibit 97% or less with respect to the reference value $A_0$ and $α_0$ respectively expressed by the following formulas:

$$A_0=0.85+0.29 [Ge]$$

$$α_0=0.86+0.29 [Ge],$$

and
(3) the difference in transmission loss $Δα_{1.38}$ at a wavelength of 1.38μm between before and after hydrogen treatment is 0.15dB/km or less.

In accordance with the above-described optical fiber, in the optical fiber of which core is doped with Ge in a predetermined quantity of dopant, the Rayleigh scattering coefficient A and the transmission loss $α_{1.00}$ including the Rayleigh scattering loss thereof are reduced by 3% or more of the reference value $A_0$, $α_0$ indicative of the value in the ordinary optical fiber respectively, to the value of 97% or less thereof. Furthermore, difference in transmission loss $Δα_{1.38}$ serving as the measure with respect to the hydrogen-resisting property of the optical fiber, between before and after the hydrogen treatment, is reduced to 0.15dB/km or less. As a consequence, the Rayleigh scattering loss is reduced, while there is obtained an optical fiber having excellent hydrogen-resisting property. The optical fiber as described above can be fabricated with the above-mentioned method capable of fabricating the same.

Here, it is preferred that the cladding region has one or more cladding layers formed either of pure $SiO_2$, $SiO_2$ doped with Ge or $SiO_2$ doped with F (fluorine). By means of the above-described constitution, various types of optical fibers such as a single mode fiber, a dispersion shift fiber, dispersion compensation fiber or the like can be obtained.

**Brief Description of the Drawings**

Fig. 1 is a diagram schematically showing the constitution of an embodiment of the fabricating method of optical fiber and a drawing apparatus used for fabricating the optical fiber;
Fig. 2 is a graph showing a profile of refractive index in an optical fiber in accordance with a first embodiment;
Fig. 3 is a table showing the fabricating conditions in the examples A1-A4 of the optical fiber and transmission loss thereof;
Fig. 4 is a table showing the fabricating conditions in the comparative examples B1-B5 of the optical fiber and transmission loss thereof;
Fig. 5 is a graph showing a profile of refractive index in an optical fiber in accordance with a second embodiment;

Fig. 6 is a graph showing a profile of refractive index in an optical fiber in accordance with a third embodiment;

Fig. 7 is a table showing the fabricating conditions of the optical fibers and the transmission loss thereof in the examples C1-C3 and the comparative examples D1-D3;

Fig. 8 is a table showing the temperature changes occurring at the time of fabrication of the optical fiber in the example E and the comparative example F of the optical fiber;

Fig. 9 is a table showing the cooling speed and the annealing effect of the optical fiber in case of the line speed of the optical fiber set to Vf=400m/minute;

Fig. 10 is a table showing the cooling speed and the annealing effect of the optical fiber in case of the line speed of the optical fiber set to Vf=800m/minute;

Fig. 11 is a table showing the cooling speed and the annealing effect of the optical fiber in case of the line speed of the optical fiber set to Vf=1600m/minute;

Fig. 12 is a table showing the cooling speed and the annealing effect of the optical fiber in case of the line speed of the optical fiber set to Vf=3000m/minute; and

Fig. 13 is a table showing the cooling speed and the annealing effect of the optical fiber in case of the line speed of the optical fiber set to Vf=800m/minute.

**Best Mode for Carrying out the Invention**

Hereinafter, referring to the drawings, preferred embodiments of an optical fiber and a fabricating method thereof in accordance with the present invention will be described. In the description of the drawings, the identical items will be designated with the identical reference numerals and symbols and repetitive description thereof will be omitted. The drawings are not drawn to scale in association with explanatory contents in the descriptions and not always coincident therewith.

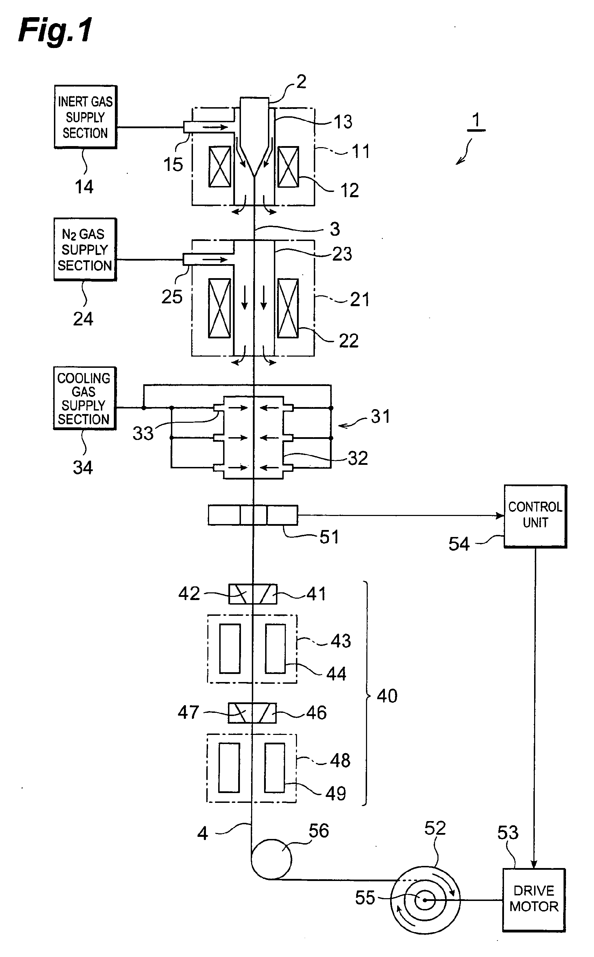

Fig. 1 is a diagram schematically showing the constitution of an embodiment of the drawing apparatus employed for fabricating the optical fiber as well as method of fabricating the same in accordance with the invention.

A drawing apparatus 1 shown in Fig. 1 is a drawing apparatus used for drawing optical fibers based on silica glass, comprised of a drawing furnace 11, a heating furnace 21 for annealing and cooling means 31. These drawing furnace 11, heating furnace 21 and cooling means 31 are disposed in the drawing direction of an optical fiber preform 2 (vertical direction in Fig. 1) in that order described. Further, downstream of the heating furnace 21 and the cooling means 31, there is provided a resin coating section 40 for coating a drawn glass fiber 3 with a resin.

To fabricate an optical fiber using the drawing apparatus 1, first of all, an optical fiber preform 2 comprised of a core region and a cladding region formed on the periphery of the core region is prepared, and then the optical fiber preform 2 held by a preform supply unit (not shown) is supplied to the drawing furnace 11. Then, the lower end of the optical fiber preform 2 is heated by a heater 12 in the drawing furnace 11 to soften the optical fiber preform 2 and drawn at a predetermined line speed to form the glass fiber 3 (drawing step). Connected to a muffle tube 13 of the drawing furnace 11 is a gas supply path 15 from an inert gas supply section 14 so that the inside of the muffle tube 13 is filled with an inert gas atmosphere.

After being heat drawn, the glass fiber 3 is sharply cooled down with an inert gas to, for example, approximately 1700°C in the muffle tube 13. After that, the glass fiber 3 is taken out of the drawing furnace 11 from the lower part of the muffle tube 13 and air cooled between the drawing furnace 11 and the heating furnace 21. In association with the inert gas, for example, $N_2$ gas may be used. The thermal conductivity $\lambda$ (T=300K) of the $N_2$ gas is 26mW/(m·K). The thermal conductivity $\lambda$ (T=300K) of the air is 26mW/(m·K).

Then, after being drawn and cooled, the glass fiber 3 is delivered to the heating furnace 21 for annealing, which is provided downstream of the drawing furnace 11 at a predetermined position between the drawing furnace 11 and the resin coating section 40. The glass fiber 3 is annealed at a predetermined temperature by a heater 22 in the heating furnace 21 (heat treatment step). In this heating furnace 21, the glass fiber 3 is annealed such that predetermined annealing conditions such as cooling speed, period of annealing time and annealing temperature of the optical fiber are satisfied.

To be more specific, in connection with the cooling speed of the glass fiber 3 there should be carried out the annealing of the optical fiber in such a manner as to satisfy the conditions that the glass fiber 3 is annealed with the cooling speed of 2000°C/second or less. Further, in connection with the period of annealing time of the glass fiber 3 there should be carried out the annealing of the glass fiber 3 in such a manner as to satisfy the conditions that meet the requirements that the period of annealing time L/Vf is equal to or longer than the relaxation time $\tau$ (L/Vf$\geq\tau$), the length of the heating furnace 21 being designated as L (m), the line speed of the glass fiber 3 being designated as Vf (m/second), the viscosity of the glass fiber 3 at the entrance of the heating furnace 21 being designated as $\eta$S (Pa·second), the tension of the glass fiber 3 per a unit cross sectional area (tension/optical fiber cross sectional area, shear stress) being designated as K (Pa), and the relaxation time thereof being defined as $\tau=\eta$S/K.

The cooling speed of the glass fiber 3 is defined as follows. Provided that the temperature of the glass fiber 3 at the entrance of the heating furnace 21 (start point of the annealing) is Ts (°C); and the temperature of the glass fiber 3 at the exit of the heating furnace 21 (end point of the annealing) is Te (°C), there is defined the cooling speed=(Ts-Te)×Vf/L.

Further, it is preferred that, in the heating furnace 21, there is to be set the temperature of the heater 22 which effects furnace temperature of the heating furnace 21 so that the above-described conditions of the cooling speed and the period of annealing time of the glass fiber 3 are satisfied. To be more specific, it is preferred that the annealing of the glass fiber 3 is carried out with the temperature of the heater 22 to be set to a predetermined temperature falling within a range from 800°C or more to 1600°C or less. Or, more particularly, it is furthermore preferred that the annealing of the glass fiber 3 is carried out with the temperature of the heater 22 to be set to a predetermined temperature falling within a range from 1100°C or more to 1600°C or less.

The heating furnace 21 has a muffle tube 23 which the glass fiber 3 passes through. A gas supply path 25 from an $N_2$ gas supply section 24 is connected to the muffle tube 23 of the heating furnace 21, wherein such arrangement is so provided that the inside of the muffle tube 23 is filled with $N_2$ gas atmosphere. In place of the $N_2$ gas, a gas such as air or Ar, which has a relatively large molecular weight, may as well be used. When the muffle tube is made of carbon, a gas containing no oxygen must be used.

Then, the annealed glass fiber 3 is introduced into a cooling means 31 for forcibly cooling the glass fiber, which is located between the drawing furnace 11 and the resin coating section 40 and in a predetermined position downstream of the heating furnace 21. The glass fiber 3 is cooled to a predetermined temperature by the cooling means 31 (cooling step). The cooling means 31 is disposed so that the glass fiber 3 annealed by the heating furnace 21 is introduced into the cooling means 31 at a predetermined temperature of 700°C or more; preferably, at a predetermined temperature within a range of 700°C -1300°C.

The cooling means 31 has a cylindrical tube 32 through which the glass fiber 3 passes. Also, on the sidewall of the cylindrical tube 32, there are provided a plurality of nozzles 33 connected to a cooling gas supply section 34. As a consequence, a cooling gas from the cooling gas supply section 34 is supplied to the glass fiber 3, which is passing through in the cylindrical tube 32, to forcibly cool the glass fiber 3. As the cooling gas, He gas is preferably used.

The glass fiber 3 is, after running out of the cooling means 31, measured in terms of the outer diameter thereof by an outer diameter-measuring device 51 in an on-line manner. The measured value is fed back to a drive motor 53, which rotationally drives the drum 52. The drum 52 is controlled to rotate such that the outer diameter is maintained at a specific size. Output signals from the outer diameter-measuring device 51 are sent to a control unit 54 as the control means. The control unit 54 calculates the rotation speed of the drum 52 and the drive motor 53 such that the outer diameter of the glass fiber 3 is maintained at a previously set predetermined value.

From the control unit 54, output signal indicating the calculated rotation speed of the drum 52 and the drive motor 53 is output to a driver for the drive motor (not shown). The driver for the drive motor controls the rotation speed of the drive motor 53 based on the output signal from the control unit 54.

The glass fiber 3 whose outer diameter has been measured by the outer diameter-measuring device 51 is introduced into the resin coating section 40, which is constructed in two stages (tandem). First, in the first resin coating section, the glass fiber 3, which has passed through the outer diameter-measuring device 51, is applied with an UV curable resin 42 by coating dies 41. The applied UV curable resin 42 is cured by ultraviolet radiation from an UV lump 44 of a resin curing section 43.

Further, in the second resin coating section, the glass fiber 3 running out of the resin curing section 43 is applied with a UV curable resin 47 by coating dies 46. The applied UV curable resin 47 is cured by ultraviolet radiation from an UV lamp 49 of a resin curing section 48. Thus, there is formed an optical fiber 4, which is composed of the glass fiber 3 coated with the resin. Then, the optical fiber 4 is wound around the drum 52 via a guide roller 56. The drum 52 is supported by a rotation drive shaft 55, and an end portion of the rotation drive shaft 55 is connected to the drive motor 53.

As described above, there is connected to the muffle tube 13 of the drawing furnace 11, the gas supply path 15 leading to the inert gas supply section 14. And the muffle tube 13 is constructed such that the inside thereof is filled with the inert gas atmosphere. It may be so constructed that an $N_2$ gas supply section is provided as the inert gas supply section 14 and $N_2$ gas is supplied to the muffle tube 13 to fill the muffle tube 13 with $N_2$ gas atmosphere. Further, both of the He gas supply section and the $N_2$ gas supply section are provided such that He gas or $N_2$ gas is supplied to the inside of the muffle tube 13 corresponding to the line speed.

Effects of the fabricating method of the optical fiber according to the above-described embodiment will be described.

In the fabricating method of the optical fiber shown in Fig. 1, to heat and draw the optical fiber preform 2, the heating furnace 21 is disposed downstream of the drawing furnace 11. When the drawn glass fiber 3 passes through the heating furnace 21, the glass fiber 3 is annealed so that the cooling speed and the period of annealing time of the glass fiber 3 satisfy the predetermined conditions. By gradually cooling the optical fiber using the heating furnace 21 as described above, the fictive temperature Tf within the optical fiber can be lowered and the Rayleigh scattering loss in the optical fiber can be reduced.

Further, for the glass fiber 3 annealed by the heating furnace 21, the cooling means 31 is further disposed downstream of the heating furnace 21 to forcibly cool the glass fiber 3 with the cooling means 31. As a consequence, the length of the path line, which is necessary to cool down the glass fiber out of the heating furnace 21 to several decade degrees, is reduced. Thus, there is reduced the length of the drawing apparatus 1 (height of the drawing apparatus) including the drawing furnace 11 and the heating furnace 21. Accordingly, the drawing apparatus 1 having the constitution shown in Fig. 1 can be miniaturized as a whole.

For example, in a constitution in which the resin coating section 40 is disposed downstream of the drawing furnace 11 and the heating furnace 21, the glass fiber 3 has to be sufficiently cooled, when the glass fiber 3 is coated with a resin. As regarding this point, in the drawing apparatus 1 shown in Fig. 1, the glass fiber 3 can be cooled to an appropriate temperature by the cooling means 31. Also, it is possible to effectively fabricate the glass fiber 3 and the optical fiber 4 by increasing the line speed (drawing speed) of the glass fiber 3 when drawing the optical fiber.

Further, in association with the forced cooling of the glass fiber 3 with this cooling means 31, the temperature when the glass fiber 3 is introduced into the cooling means 31 is set to a temperature of 700°C or more. By means of this arrangement, it is possible to reduce the Si-O defect or defects such as NBOHC within the optical fiber, which causes the loss to increase at a wavelength of 0.63μm and the loss to increase at a wavelength of 1.38μm due to degradation of hydrogen-resisting property. Accordingly, it is possible to efficiently fabricate the glass fiber 3 of which Rayleigh scattering loss is reduced and having excellent hydrogen-resisting property.

Here, in the annealing of the glass fiber 3, it is preferred that the glass fiber 3 is annealed with a furnace temperature of the heating furnace 21 controlled to a predetermined temperature within a range of 800°C-1600°C. It is further preferred that the glass fiber 3 is annealed with a furnace temperature of the heating furnace 21 controlled to a predetermined temperature within a range of 1100°C-1600°C. Thereby, the Rayleigh scattering loss in the glass fiber 3 can be satisfactorily reduced.

Furthermore, in connection with the temperature Ts at the start point of annealing of the glass fiber 3, there should be taken into account the fact that it would take a longer time to obtain the effect of the annealing, if the annealing is carried out after the temperature has been lowered. It is therefore preferred that the temperature is set within a range of 1400°C-1600°C. This temperature at the time when the glass fiber 3 enters into the heating furnace 21 is preferably set in accordance with the particular constitution of the glass fiber.

On the other hand, the temperature at the time when the glass fiber 3 is introduced into the cooling means 31 is preferably controlled to a predetermined temperature within a range of 700°C-1300°C. By means of this arrangement, there can be appropriately achieved concurrently both of reduction of the defects within the glass fiber 3 and effective forced cooling of the glass fiber 3.

Further, it is preferred that, in the course of the drawing with the drawing furnace 11, the annealing with the heating furnace 21 and the forced cooling with the cooling means 31, the line speed of the glass fiber 3 is controlled to be 300m/minute or more. Thus, by controlling the line speed of the glass fiber 3 during the drawing to a relatively high speed, the throughput of the glass fiber 3 can be enhanced.

Furthermore, in association with the annealing of the glass fiber 3 with the heating furnace 21, it is preferred that the annealing is carried out for 0.03-0.8 seconds of annealing time. By carrying out the annealing of the glass fiber 3 within a range of predetermined time, the Rayleigh scattering loss within the glass fiber 3 can be satisfactorily reduced.

Next, the optical fiber in accordance with the invention will be described. The following optical fibers can be appropriately fabricated in accordance with the above-described fabricating method.

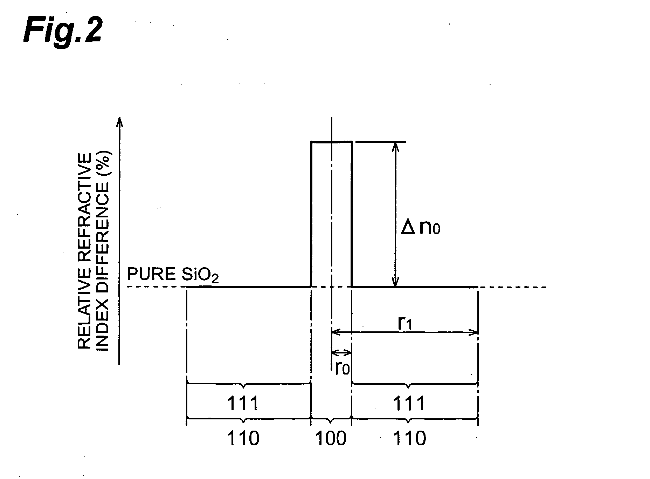

Fig. 2 is a graph showing a profile of refractive index in an optical fiber in accordance with a first embodiment of the invention. In the graph, the abscissa axis indicates the position of each portion in the optical fiber viewed from the central axis thereof. Also, the ordinate axis indicates the relative refractive-index difference (%) with respect to the pure $SiO_2$ at each portion in the optical fiber.

The optical fiber in accordance with this embodiment comprises a core region 100 and a cladding region 110 formed on the periphery of the core region 100. The core region 100 is formed as a layer of radius $r_0$ including the central axis of the optical fiber. Also, the core region 100 is formed of $SiO_2$ doped with Ge at in predetermined quantity of dopant.

To be more specific, in the core region 100, when the quantity of dopan of the Ge is represented with a relative refractive-index difference [Ge] expressed in % with respect to the pure $SiO_2$, the Ge is added thereto in such a quantity of dopant, which satisfies the following condition:

$$[Ge] \geq 0.3\%.$$

Here, the relative refractive-index difference $\Delta n_0$ of the core region 100 is: $\Delta n_0 = [Ge] > 0$.

Further, the cladding region 110 in accordance with the embodiment is comprised of a single layered cladding layer 111. The cladding layer 111 is formed as a layer of radius $r_1$ formed on the periphery of the core region 100. Furthermore, the cladding layer 111 is formed of pure $SiO_2$. Here, the relative refractive-index difference $\Delta n_1$ of the cladding layer 111 is: $\Delta n_1 = 0$.

In the constitution as described above, the optical fiber is formed so that the Rayleigh scattering coefficient A (dB/km·μm$^4$) with respect to the Rayleigh scattering loss which occurs in the optical fiber, and the transmission loss $\alpha_{1.00}$ (dB/km) at a wavelength of 1.00μm are 97% or less, with respect to the reference value $A_0$ and $\alpha_0$, which are expressed respectively as follow:

$$A_0=0.85+0.29[Ge]$$

$$\alpha_0=0.86+0.29[Ge].$$

Furthermore, the optical fiber is formed so that the difference in transmission loss $\Delta\alpha_{1.38}$ at a wavelength of 1.38μm between before and after hydrogen treatment is 0.15dB/km or less. Here, the $A_0$, for example, in case of [Ge]=0.35%, is as follows:

$$A_0=0.85+0.29\times0.35=0.95.$$

In the optical fiber shown in Fig. 2, the core region 100 is doped with Ge in such a quantity of dopant that satisfies the condition [Ge]≥0.3%. In the optical fiber of which core is doped with Ge as described above, Si-O defect or a defect such as NBOHC is liable to be caused by the Ge within the optical fiber. And these defects may cause the loss at a wavelength of 0.63μm to increase and the loss at wavelength of 1.38μm due to the degradation of hydrogen-resisting property to increase.

To solve the above problem, in the above-described optical fiber, the core region 100 is doped with Ge and the values of the Rayleigh scattering coefficient A and the transmission loss $\alpha_{1.00}$ including the Rayleigh scattering loss are 97% or less corresponding to the reduction by 3% or more with respect to the reference values $A_0$ and $\alpha_0$ indicating the values of ordinary optical fiber. The difference in transmission loss $\Delta\alpha_{1.38}$ between before and after hydrogen treatment, as will be described later, depends on the amount of the defects occurring within the optical fiber and serves as a measure in connection with the hydrogen-resisting property of the optical fiber. This difference in transmission loss $\Delta\alpha_{1.38}$ is reduced to 0.15dB/km or less. As a consequence, the optical fiber in which the Rayleigh scattering loss is reduced and having excellent hydrogen-resisting property can be obtained.

Here, in the constitution shown in Fig. 2, the cladding region 110 formed on the periphery of the core region 100 comprises a single layered cladding layer 111 formed of pure SiO$_2$. However, generally, it is preferred that there is provided a constitution having one or more cladding layers formed of either one of the pure SiO$_2$, SiO$_2$ doped with Ge or SiO$_2$ doped with F, respec-

tively.

By means of the constitution as described above, there can be fabricated with favorably high productivity various kinds of optical fibers such as a single mode fiber (SMF), a dispersion shift fiber (DSF) and a dispersion compensation fiber (DCF) having a satisfactorily characteristics.

The characteristic conditions of the above-mentioned optical fiber will be further described. In the optical fiber in accordance with the embodiment, as the measure for evaluating the reduction effect of the Rayleigh scattering loss or the like, there are used the Rayleigh scattering coefficient A and transmission loss $\alpha_{1.00}$ at a wavelength of 1.00μm, wherein these Rayleigh scattering coefficients A and the transmission loss $\alpha_{1.00}$ are the values of 97% or less with respect to the reference values $A_0$ and $\alpha_0$ indicating ordinary values, corresponding to the reduction by 3% or more with respect to the reference values $A_0$ and $\alpha_0$.

In connection with the Rayleigh scattering loss and other components of transmission loss such as structural asymmetry loss, the transmission loss $\alpha_\lambda$ (dB/km) at a wavelength of $\lambda$ in an optical fiber is generally expressed as:

$$\alpha_\lambda=A/\lambda^4+B+C(\lambda).$$

Herein, the first term $A/\lambda^4$ (dB/km) indicates the Rayleigh scattering loss; and the coefficient A thereof is the Rayleigh scattering coefficient (dB/km·μm$^4$). As is clear from the above formula, the Rayleigh scattering loss is proportional to the Rayleigh scattering coefficient A. Accordingly, when the Rayleigh scattering coefficient A is reduced by 3% from the reference value, the Rayleigh scattering loss is reduced by 3%.

Here, in an optical fiber, which is obtained by an ordinary fabricating method, wherein the optical fiber is not subjected to the annealing or the like by the heating furnace, the value of the Rayleigh scattering coefficient A (dB/km·μm$^4$) results in:

$$A_0=0.85+0.29[Ge],$$

provided that the quantity of dopant of Ge to the core region is expressed by the above-described [Ge]. Accordingly, the ordinary value $A_0$ can be used as the reference value of the Rayleigh scattering coefficient A. Here, preferably the obtained Rayleigh scattering coefficient A is reduced by 3% or more with respect to the reference value $A_0$.

Further, in order to evaluate the entire transmission loss including the Rayleigh scattering loss, the transmission loss $\alpha_{1.00}$ at a wavelength of 1.00μm may be used as the measure. When the wavelength is 1.00μm, in the above formula of the transmission loss $\alpha_\lambda$, B+C($\lambda$) is approximately 0.01. Consequently, in an optical fiber, which is obtained by the ordinary fabricating method, the value of the transmission loss $\alpha_{1.00}$ (dB/km) is as follows.

$$\alpha_0 = A_0 + 0.01$$

$$= 0.86 + 0.29[Ge].$$

Accordingly, the ordinary value $\alpha_0$ may be used as the reference value of the transmission loss $\alpha_{1.00}$. Here, it is preferred that the obtained transmission loss $\alpha_{1.00}$ in the optical fiber is reduced by 3% or more with respect to the reference value $\alpha_0$.

As described above, by using the Rayleigh scattering coefficient A or the transmission loss $\alpha_{1.00}$ as the measure, there can be reliably obtained the reduction effect of the Rayleigh scattering loss or the entire transmission loss including the Rayleigh scattering loss. Also, according to the respective formulas of the above-described reference values $A_0$ and $\alpha_0$, variable [Ge] concerning the quantity of dopant of Ge added to the core is included in the formulas. Accordingly, it is possible to evaluate the transmission loss corresponding to the quantity of dopant of Ge.

The Rayleigh scattering coefficient A can be obtained from the data concerning the wavelength dependency of the transmission loss (for example, inclination in $1/\lambda^4$ plot) based on the above formula. Further, as the measure for evaluating the entire transmission loss, there is used a transmission loss $\alpha_{1.00}$ at a wavelength of 1.00μm. The reason for this is that the value of the transmission loss at 1.00μm is larger as compared with the waveband of 1.55μm or the like which is used for optical transmission; thus, a relatively short sample of approximately 1-10km of the optical fiber is enough to make the evaluation possible with a sufficient accuracy.

Further, there is a specific relationship between the transmission loss $\alpha_{1.00}$ at a wavelength of 1.00μm and the transmission loss $\alpha_{1.55}$ at a wavelength of 1.55μm of the optical fiber. Accordingly, by evaluating the reduction effect at transmission loss $\alpha_{1.00}$, the reduction of the transmission loss $\alpha_{1.55}$ also can be likewise evaluated. As the particular corresponding relationship, the transmission loss $\alpha_{1.00}$ at a wavelength of 1.00μm is, as described above, expressed as follow:

$$\alpha_{1.00} = A + 0.01.$$

The formula of the transmission loss $\alpha_{1.55}$ at a wavelength of 1.55μm equivalent to the above formula is:

$$\alpha_{1.55} = A \times 0.17325 + 0.025.$$

Next, the characteristic conditions with respect to the difference in transmission loss $\Delta\alpha_{1.38}$ in the above-described optical fiber will be described. In the optical fiber in accordance with the embodiment, as the measure with respect to the hydrogen-resisting property of the optical fiber, there is used the difference in transmission loss $\Delta\alpha_{1.38}$ at a wavelength of 1.38μm between before and after hydrogen treatment, and the value of the difference in transmission loss $\Delta\alpha_{1.38}$ is determined as 0.15dB/km or less.

In the optical fiber of a constitution wherein the core region is doped with Ge, there occurs an increase in peak of loss over a wide range at a wavelength of 0.63μm due to Si-O defect caused by Ge, defect of NBOHC or the like, as described above. These defects change to Si-O-H in a hydrogen atmosphere causing the loss at a wavelength of 1.38μm to increase.

Accordingly, by obtaining difference in transmission loss $\Delta\alpha_{1.38}$ between before hydrogen treatment and after hydrogen treatment with respect to the transmission loss $\alpha_{1.38}$ at a wavelength of 1.38μm, the defects generated in the drawn optical fiber can be evaluated. And by controlling the difference in transmission loss $\Delta\alpha_{1.38}$ to 0.15dB/km or less, there can be obtained an optical fiber having an excellent hydrogen-resisting property.

Here, to be more specific, in association with difference in transmission loss $\Delta\alpha_{1.38}$ between before hydrogen treatment and after hydrogen treatment, the hydrogen treatment is carried out for 20 hours at a temperature of 80°C in hydrogen atmosphere composed of nitrogen 99%: hydrogen 1%. Then from an increment of the loss being the difference between the transmission loss $\alpha_{1.38}$ at a wavelength of 1.38μm obtained with respect to the optical fiber before hydrogen treatment and the transmission loss $\alpha_{1.38}$ obtained with respect to the optical fiber after hydrogen treatment, there is acquired the difference in transmission loss $\Delta\alpha_{1.38}$, which is used as the measure for the hydrogen-resisting property. When the defects in the optical fiber before hydrogen treatment are reduced, the difference in transmission loss $\Delta\alpha_{1.38}$ is reduced.

Referring to particular examples and comparative examples, a description will be made of optical fibers in accordance with the invention and the reduction effect of the transmission loss and the improvement effect of the hydrogen-resisting property by means of the fabricating method thereof. Each of the optical fibers in the following examples is fabricated using the drawing apparatus 1 constituted as shown in Fig. 1.

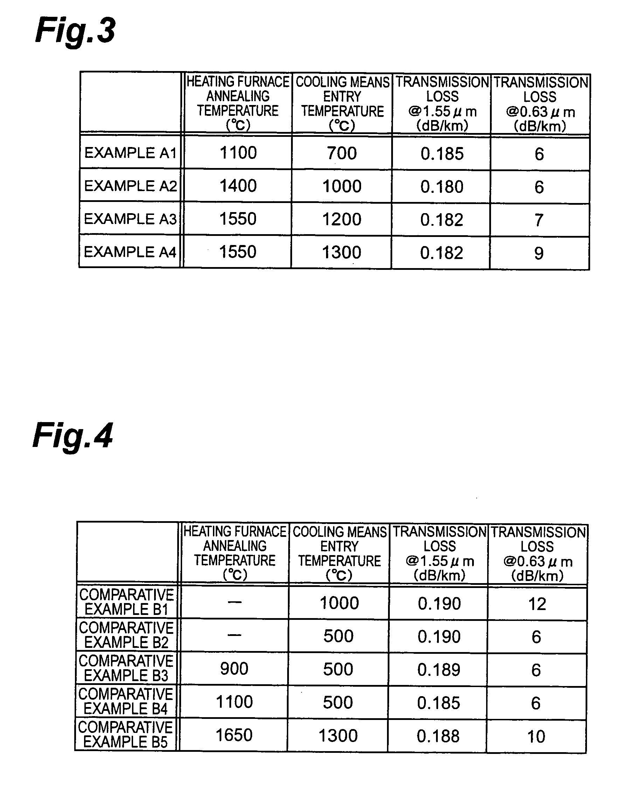

Fig. 3 is a table showing the fabricating conditions in the examples A1-A4 of the optical fiber and transmission loss thereof in accordance with the invention. Here, as the fabricated optical fiber, there is assumed a single mode fiber doped with Ge (Ge-SM), which has the constitution shown in Fig. 2. To be more specific, the outer diameter of the core region 100 formed of $SiO_2$ doped with Ge is set as $2r_0 = 8$μm, and the relative refractive-index difference thereof is set as

$\Delta n_0$=[Ge]=0.35%, the outer diameter of the cladding layer 111 formed of pure $SiO_2$ is set as $2r_1$=125µm, and the relative refractive-index difference thereof is set as $\Delta n_1$=0%.

Also, in association with the fabricating conditions of the optical fibers, there is used the cooling means 31 for forcibly cooling the optical fiber 3 having a diameter of 6mm and a length of 4m, and as the cooling gas, He gas is supplied at a flow rate of 201/minute (20slm). And the line speed for drawing the optical fiber 3 is 400m/minute. And, there are listed in the table of Fig. 3 the annealing temperature (°C) of the optical fiber 3 in the heating furnace 21 and entry temperature (°C) of the optical fiber 3 on being introduced into the cooling means 31 of each example. And further, the annealing condition of the optical fiber is set in such a manner that meets a condition that the above-described cooling speed is 2000°C/second or less as well as a condition that the period of annealing time L/Vf is equal to the relaxation time $\tau$ or more.

Further, in the table in the Fig. 3, there are indicated as the transmission loss of the optical fiber in each example, a transmission loss $\alpha_{1.55}$ (dB/km) at a wavelength of 1.55µm, and transmission loss $\alpha_{0.63}$(dB/km) at a wavelength of 0.63µm. Every value of the loss is the value before the optical fiber is subjected to the hydrogen treatment.

In these values of losses, the transmission loss $\alpha_{1.55}$ at a wavelength of 1.55µm mainly indicates the reduction effect of the Rayleigh scattering loss by virtue of the annealing of the drawn optical fiber 3 by the heating furnace 21. And the transmission loss $\alpha_{0.63}$ at a wavelength of 0.63µm indicates the reduction effect of the defects in the optical fiber based on the forced cooling or the like of the annealed optical fiber 3 by the cooling means 31.

The defects in the optical fiber causing an increase in the transmission loss $\alpha_{0.63}$, as described above, cause the loss at a wavelength of 1.38µm to increase after the optical fiber is subjected to the hydrogen treatment.

As seen from the examples A1-A4 shown in the table in Fig. 3, in the example A1, the annealing temperature in the heating furnace is set to 1100°C, and the entry temperature on being introduced into the cooling means is set to 700°C; and the obtained transmission loss is $\alpha_{1.55}$=0.185dB/km, and $\alpha_{0.63}$=6dB/km respectively. Also, in the example A2, the annealing temperature in the heating furnace is set to 1400°C, and the entry temperature on being introduced into the cooling means is set to 1000°C; and the obtained transmission loss is $\alpha_{1.55}$=0.180dB/km, and $\alpha_{0.63}$=6dB/km respectively.

Also, in the example A3, the annealing temperature in the heating furnace is set to 1550°C, and the entry temperature on being introduced into the cooling means is set to 1200°C; and the obtained transmission loss is $\alpha_{1.55}$=0.182dB/km, and $\alpha_{0.63}$=7dB/km respectively. Also, in the example A4, the annealing temperature in the heating furnace is set to 1550°C, and the entry temperature on being introduced into the cooling means is set to 1300°C; and the obtained transmission loss is $\alpha_{1.55}$=0.182dB/km, and $\alpha_{0.63}$=9dB/km respectively.

In these examples, the annealing temperature in the heating furnace is set to a temperature within a range of 1100-1600°C. As a consequence, the Rayleigh scattering loss in the optical fiber has been reduced, and there has been reduced the transmission loss $\alpha_{1.55}$ at a wavelength of 1.55µm including Rayleigh scattering loss. Also, in every example, the entry temperature on being introduced into the cooling means is set to a temperature within a range of 700°C or more. As a consequence, the defects in the optical fiber are reduced resulting in a reduction of the transmission loss $\alpha_{0.63}$ at a wavelength of 0.63µm due to the defects.

On the other hand, Fig. 4 is a table showing the fabricating conditions in case of the comparative examples B1-B5 of the optical fiber as well as the transmission loss thereof. Here, as the fabricated optical fiber, there is assumed a single mode fiber doped with Ge (Ge-SM) as is also the case with the examples A1-A4, which has the construction shown in Fig. 2.

In case of the comparative example B1 from among the comparative examples B1-B5 shown in the table of Fig. 4, there is carried out no annealing by the heating furnace; and the entry temperature on being introduced into the cooling means is set to 1000°C, and the obtained transmission loss is $\alpha_{1.55}$ =0.190dB/km and $\alpha_{0.63}$=12dB/km respectively. Here, since the optical fiber is not subjected to the annealing, transmission loss $\alpha_{1.55}$ including the Rayleigh scattering loss is increased. Further, there is also increased transmission loss $\alpha_{0.63}$ due to the defects in the optical fiber.

Also, in the comparative example B2, no annealing by the heating furnace is carried out; and the entry temperature on being introduced into the cooling means is set to 500°C, and the obtained transmission loss is $\alpha_{1.55}$ =0.190dB/km and $\alpha_{0.63}$=6dB/km respectively. Here, since the optical fiber is not subjected to the annealing, transmission loss $\alpha_{1.55}$ including the Rayleigh scattering loss is increased. However, since the entry temperature on being introduced into the cooling means is low, the transmission loss $\alpha_{0.63}$ is reduced.

Further, in the comparative example B3, the annealing temperature by the heating furnace is set to 900°C; and the entry temperature on being introduced into the cooling means is set to 500°C, and the obtained transmission loss is $\alpha_{1.55}$ =0.189dB/km and $\alpha_{0.63}$=6dB/km respectively. Here, since the annealing temperature of the optical fiber is low, there is increased the transmission loss $\alpha_{1.55}$ including the Rayleigh scattering loss. However, since the entry temperature on being introduced into the cooling means is low, the transmission loss $\alpha_{0.63}$ is reduced.

Furthermore, in the comparative example B4, the annealing temperature by the heating furnace is set to 1100°C; and the entry temperature on being introduced into the cooling means is set to 500°C, and the obtained transmission loss is $\alpha_{1.55}$ =0.185dB/km and $\alpha_{0.63}$=6dB/km respectively. Here, since the annealing temperature of the optical fiber is relatively high, the transmission loss $\alpha_{1.55}$ including the Rayleigh scattering loss is somewhat reduced. Also, the entry temperature on being introduced into the cooling means is low and the transmission loss $\alpha_{0.63}$ also is reduced, where upon thus there is obtained, an optical fiber exhibiting excellent properties in association with the transmission loss. However, when the entry temperature on being introduced into the cooling means is set to a low temperature as 500°C, the optical fiber has to be sufficiently air cooled between the heating furnace and no cooling means. Accordingly, the drawing apparatus cannot be miniaturized as a whole.

Still further, in the comparative example B5, the annealing temperature by the heating furnace is set to 1650°C; and the entry temperature on being introduced into the cooling means is set to 1300°C, and the obtained transmission loss is $\alpha_{1.55}$ =0.188dB/km and $\alpha_{0.63}$=10dB/km respectively. Here, since the annealing temperature of the optical fiber is too high, there is increased the transmission loss $\alpha_{1.55}$ including the Rayleigh scattering loss. Also, there is increased the transmission loss $\alpha_{0.63}$ due to the defects in the optical fiber.

As seen from the above-described examples A1-A4 and comparative examples B1-B5, by setting the annealing temperature of the optical fiber by the heating furnace to a temperature of 1100-1600°C, and by setting the entry temperature of the optical fiber on being introduced into the cooling means to a temperature of 700°C or more, preferably, to a temperature of 700-1300°C, the Rayleigh scattering loss can be reduced resulting in an optical fiber having excellent hydrogen-resisting property. Further, it is possible to miniaturize the drawing apparatus, and the optical fiber can be fabricated efficiently.

The optical fiber in accordance with the present invention will be further described.

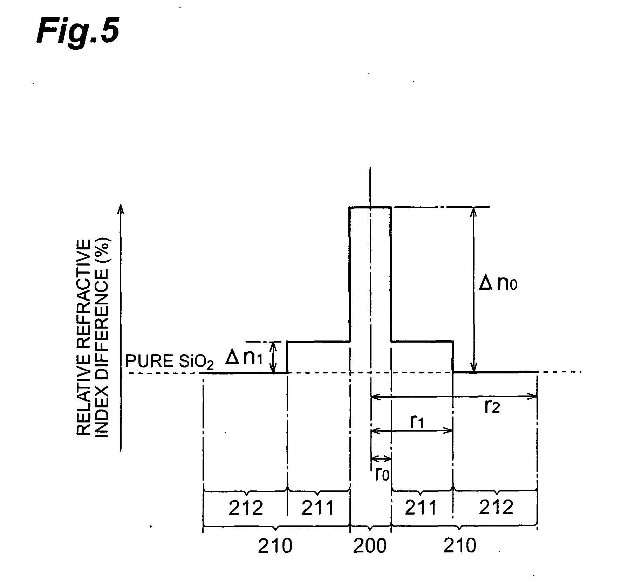

Fig. 5 is a graph showing a profile of refractive index in an optical fiber in accordance with a second embodiment of the invention. In the graph, the abscissa axis indicates the position of each portion in the optical fiber on being viewed from the central axis thereof. Also, the ordinate axis indicates the relative refractive-index difference (%) with respect to the pure $SiO_2$ at each portion in the optical fiber.

The optical fiber in accordance with this embodiment comprises a core region 200 and a cladding region 210 formed on the periphery of the core region 200. The core region 200 is formed as a layer with a radius $r_0$ including the central axis of the optical fiber. Further, the core region 200 is formed of $SiO_2$ doped with Ge in such a quantity of dopant that satisfies the above-described condition:

$$[Ge] \geq 0.3\%.$$

As a consequence, the relative refractive-index difference $\Delta n_0$ of the core region 200 is: $\Delta n_0 = [Ge] > 0$.

Further, according to this embodiment, the cladding region 210 is comprised of double-layered cladding layers 211 and 212. The inner first cladding layer 211 is formed as a layer with a radius $r_1$ formed on the periphery of the core region 200. Furthermore, the cladding layer 211 is formed of $SiO_2$ doped with Ge in a predetermined quantity of dopant. As a consequence, the relative refractive-index difference $\Delta n_1$ of the cladding layer 211 is: $\Delta n_1 > 0$.

Furthermore, the outer second cladding layer 212 is formed as a layer of radius $r_2$ formed on the periphery of the first cladding layer 211. Further, the cladding layer 212 is formed of pure $SiO_2$. As a consequence, the relative refractive-index difference $\Delta n_2$ of the cladding layer 212 is: $\Delta n_2 = 0$.

The Rayleigh scattering coefficient A, the transmission loss $\alpha_{1.00}$ at a wavelength of 1.00μm and the difference in transmission loss $\Delta\alpha_{1.38}$ at a wavelength of 1.38μm between before and after hydrogen treatment are the same as the above-described characteristic conditions of the optical fiber in accordance with the first embodiment shown in Fig. 2. The optical fiber having the constitution as described above is suitably applicable to, for example, a dispersion shift fiber (DSF).

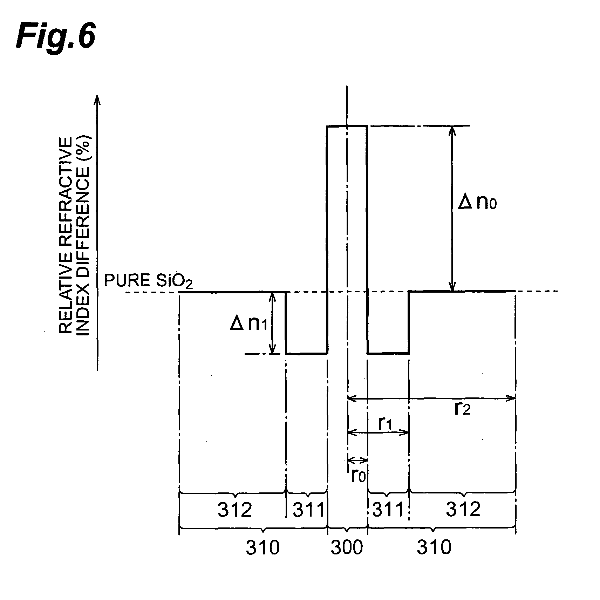

Fig. 6 is a graph showing a profile of refractive index in an optical fiber in accordance with a third embodiment of the invention. In the graph, the abscissa axis indicates the position of each portion in the optical fiber viewed from the central axis thereof. Also, the ordinate axis indicates the relative refractive-index difference (%) with respect to the pure $SiO_2$ at each portion in the optical fiber.

The optical fiber in accordance with this embodiment comprises a core region 300 and a cladding region 310 formed on the periphery of the core region 300. The core region 300 is formed as a layer with a radius $r_0$ including the central axis of the optical fiber. Further, the core region 300 is formed of $SiO_2$ doped with Ge in a quantity of dopant that satisfies the above-described condition:

$$[Ge] \geq 0.3\%.$$

Here, the relative refractive-index difference $\Delta n_0$ of the core region 300 is: $\Delta n_0 = [Ge] > 0$.

Further, according to this embodiment, the cladding region 310 is comprised of double-layered cladding layers 311 and 312. The inner first cladding layer 311 is formed as a layer having a radius of $r_1$ formed on the periphery of the core region 300. Furthermore, the cladding layer 311 is formed of $SiO_2$ doped with F at a predetermined quantity of dopant. As a consequence, the relative refractive-index difference $\Delta n_1$ of the cladding layer 311 is: $\Delta n_1 < 0$.

Furthermore, the outer second cladding layer 312 is formed as a layer with a radius of $r_2$ formed on the periphery of the first cladding layer 311. Further, the cladding layer 312 is formed of pure $SiO_2$. As a consequence, the relative refractive-index difference $\Delta n_2$ of the cladding layer 312 is: $\Delta n_2 = 0$.

In connection with the Rayleigh scattering coefficient A, the transmission loss $\alpha_{1.00}$ at a wavelength of 1.00μm and the difference in transmission loss $\Delta\alpha_{1.38}$ at a wavelength of 1.38μm between before and after hydrogen treatment, the same is the case with the above-described characteristic conditions of the optical fiber in accordance with the first embodiment shown in Fig. 2. The optical fiber having the constitution as described above is suitably applicable to, for example, a dispersion compensation fiber (DCF).

The reduction effect of the transmission loss and the improvement effect of the hydrogen-resisting property in the optical fiber in accordance to the respective embodiments shown in Fig. 2, Fig. 5 and Fig. 6 will be described along with particular examples and comparative examples.

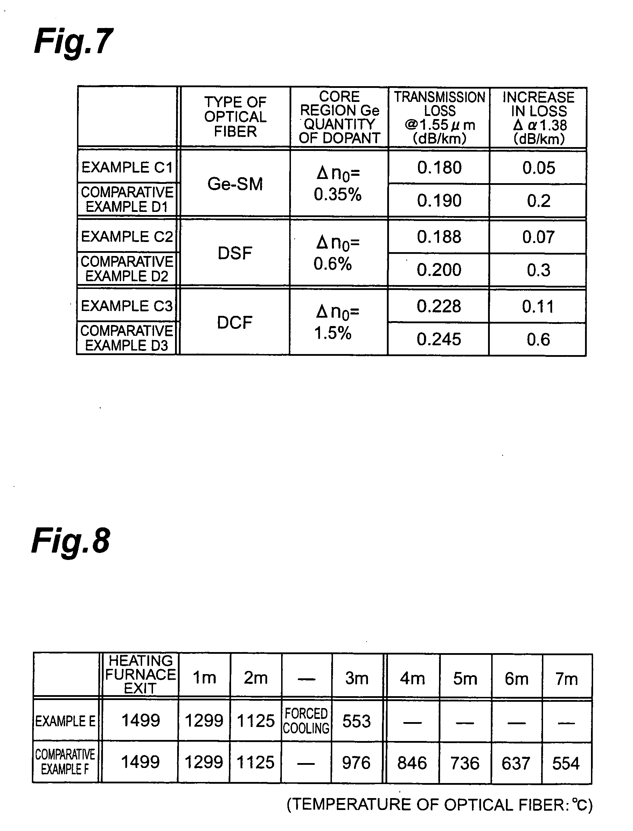

Fig. 7 is a table showing the fabricating conditions of the optical fibers and the transmission loss thereof in the examples C1-C3 and the comparative examples D1-D3.

Here, in the example C1 and the comparative example D1, as the fabricated optical fiber, there is assumed a single mode fiber doped with Ge (Ge-SM), which has the constitution shown in Fig. 2. To be more specific, the outer diameter of the core region 100 formed of $SiO_2$ doped with Ge is set as $2r_0 = 8$μm; the relative refractive-index difference thereof is set as $\Delta n_0 = [Ge] = 0.35\%$; the outer diameter of the cladding layer 111 formed of pure $SiO_2$ is set as $2r_1 = 125$μm; and the relative refractive-index difference thereof is set as $\Delta n_1 = 0\%$.

Further, in the example C2 and the comparative example D2, as the optical fiber, there is assumed a dispersion shift fiber (DSF), which has the constitution shown in Fig. 5. To be more specific, the outer diameter of the core region 200 formed of $SiO_2$ doped with Ge is set as $2r_0 = 6$μm; the relative refractive-index difference thereof is set as $\Delta n_0 = [Ge] = 0.6\%$; the outer diameter of the first cladding layer 211 formed of $SiO_2$ doped with Ge is set as $2r_1 = 40$μm; the relative refractive-index difference thereof is set as $\Delta n_1 = 0.1\%$; the outer diameter of the second cladding layer 212 formed of pure $SiO_2$ is set as $2r_2 = 125$μm; and the relative refractive-index difference is set as $\Delta n_2 = 0\%$.

Furthermore, in the example C3 and the comparative example D3, as the optical fiber, there is assumed a dispersion compensation fiber (DCF), which has the constitution shown in Fig. 6. To be more specific, the outer diameter of the core region 300 formed of $SiO_2$

doped with Ge is set as $2r_0 = 4$μm; the relative refractive-index difference is set as $\Delta n_0 = [Ge] = 1.5\%$; the outer diameter of the first cladding layer 311 formed of $SiO_2$ doped with F is set as $2r_1 = 8$μm; the relative refractive-index difference thereof is set as $\Delta n_1 = -0.4\%$; the outer diameter of the second cladding layer 312 formed of pure $SiO_2$ is set as $2r_2 = 125$μm; and the relative refractive-index difference is set as $\Delta n_2 = 0\%$.

Further, in association with the fabricating conditions, in the examples C1-C3, there are used the fabricating conditions of the example A2 in which, the annealing temperature of the optical fiber in the heating furnace is 1400°C; and the entry temperature of the optical fiber into the cooling means is 1000°C (refer to Fig. 3). In the comparative examples D1-D3, there are used the fabricating conditions of the comparative example B1, in which the optical fibers are not subjected to the annealing in the heating furnace, and the entry temperature of the optical fiber on being introduced into the cooling means is 1000°C (refer to Fig. 4). Further, the line speed and the like of the optical fiber are the same as those in the cases shown in Fig. 3 and Fig. 4. There are made the annealing conditions of the optical fibers in examples C1-C3 such that there are satisfied the above-mentioned condition that the cooling speed is 2000°C/second or less and the condition that the period of annealing time L/Vf is equal to the relaxation time $\tau$ or more.

Further, in the table in the Fig. 7, as the characteristics of the loss of the optical fiber in each example and comparative example, there are indicated transmission loss $\alpha_{1.55}$ (dB/km) at a wavelength of 1.55μm, and difference in transmission loss $\Delta\alpha_{1.38}$ (dB/km) between before and after hydrogen treatment at a wavelength of 1.38μm. Here, the difference in transmission loss $\Delta\alpha_{1.38}$ at a wavelength of 1.38μm indicates, as is the case with the transmission loss $\alpha_{0.63}$ at a wavelength of 0.63μm shown in Fig. 3, the reduction effect of the defects in the optical fiber by the forced cooling or the like with a cooling means of the annealed optical fiber.

In the examples C1-C3 shown in the table of Fig. 7, the transmission loss is $\alpha_{1.55} = 0.180$, 0.188 and 0.228, respectively. In these values, although the transmission loss increases corresponding to the quantity of dopant of Ge added to the core, there is reduced the Rayleigh scattering loss in the optical fiber by virtue of the annealing in the heating furnace, and there is reduced the transmission loss $\alpha_{1.55}$ including the Rayleigh scattering loss at a wavelength of 1.55μm.

Further, the difference in transmission loss is $\Delta\alpha_{1.38} = 0.05$, 0.07 and 0.11 respectively. In these values, the defects in the optical fiber are reduced based on the settings or the like of the entry temperature on being introduced into the cooling means, and thus, there is reduced the difference in transmission loss $\Delta\alpha_{1.38}$ at a wavelength of 1.38μm between before and after hydrogen treatment due to the defects to 0.15dB/km or less.

On the other hand, in the comparative examples D1-D3, the transmission loss is $\alpha_{1.55}$ =0.190, 0.200 and 0.245,respectively; and the difference in transmission loss is $\Delta\alpha_{1.38}$=0.2, 0.3 and 0.6, respectively. Each of these values is larger than the value in the corresponding examples C1-C3. Accordingly, there are degraded the transmission loss and the hydrogen-resisting property of the optical fibers.

From the above-described examples C1-C3 and the comparative examples D1-D3, by setting the annealing temperature of the optical fiber in the heating furnace to a temperature of 1100-1600°C and the entry temperature of the optical fiber on being introduced into the cooling means to a temperature of 700°C or more, in either of the optical fibers, which has the constitution shown in Fig. 2, Fig. 5 and Fig. 6 respectively, the Rayleigh scattering loss is reduced, and thus, it is demonstrated that the optical fibers having excellent hydrogen-resisting property can be obtained.

Fig. 8 is a table showing the amount of temperature changes during fabrication of the optical fiber in the example E and the comparative example F of the optical fiber. In the table, there are indicated the temperature changes (°C) of the optical fibers with respect to the distance from the exit of the heating furnace.

To be more specific, in the example E and comparative example F, the temperature of the optical fiber at the entrance of the heating furnace is set to 1600°C; the line speed of the optical fiber is set to 1200m/minute; the length of the heating furnace is set to 2m; the annealing temperature is set to 1200°C; and the period of annealing time is set to 0.1 seconds. Further, in the example E, at a distance from the exit of the heating furnace in a range of 2m-3m, the optical fiber is subjected to a forced cooling with the He cooling means. Furthermore, in the example E and the comparative example F, there is assumed single mode fiber doped with Ge having the constitution shown in Fig. 2. The diameter of the glass fiber is 125μm. Also, under these conditions, the relaxation time τ is approximately 0.05 seconds; thus, the period of annealing time is longer than that.

Further, the temperature change of the optical fiber is calculated using the following Paek's formula:

$$\theta = \exp\{-[(4h)/(\rho C_p V)]S\},$$

or the following modified formula thereof:

$$\theta = \exp\{-[(4h)/(\rho C_p d)]t\}.$$

Here, "h" indicates heat transfer coefficient, "ρ" indicates density, "$C_p$" indicates specific heat, "V" indicates line speed of the optical fiber, "d" indicates diameter of the optical fiber, and "t" indicates elapsed time.

Further, "θ" and "S" are expressed by the following formulas:

$$\theta = (T-T_0) / (T_s-T_0)$$

$$S = Z/d.$$

Here, "T" indicates temperature, "$T_s$" indicates softening temperature, "$T_0$" indicates atmospheric temperature, and "Z" indicates position (refer to a document: "U.C. Paek et.al, Journal of The American Ceramic Society Vol.58, No.7-8, pp.330-335").

In the table in Fig. 8, in both of the example E and the comparative example F, the temperature of the optical fiber at the exit of the heating furnace is 1499°C; at a point 1m away from the exit, the temperature thereof is 1299°C; and at a point 2m away from the exit, the temperature thereof is 1125°C. And downstream of them, a forced cooling with the He cooling means is performed. In the example E, at a point 3m away from the exit, the temperature of the optical fiber is 553°C, which is lower than 600°C. On the other hand, in the comparative example F, in which the forced cooling is not made, at a point of 7m away from the exit, the temperature of the optical fiber is 554°C, which is lower than 600°C.

That is, in this example, by disposing the cooling means downstream of the heating furnace, the length of the drawing apparatus for lowering the temperature of the optical fiber to 600°C or less can be reduced by 4m. Accordingly, the drawing apparatus can be largely miniaturized. As a consequence, the construction cost for the drawing apparatus can be reduced. Also, by increasing the line speed of the optical fiber during drawing, the productivity of the optical fiber can be increased.

The above-mentioned effect is remarkable in the case where the line speed of the optical fiber during drawing is high. For example, in the example shown in Fig. 8, when the line speed is 1200m/minute, a space of 4m can be reduced. Thus, when the line speed of the optical fiber is 300m/minute or more, the space for the drawing apparatus can be reduced by 1m or more.

Further, in case of the heating furnace of 1m in length, the period of annealing time of the optical fiber with the heating furnace is 0.2-0.03 seconds, when the line speed of the optical fiber is 300-1800m/minute. Also, in case of the heating furnace of 4m in length, the period of annealing time is 0.8-0.13 seconds. Accordingly, under the above-described conditions, it is preferred that the period of annealing time with the heating furnace is set to 0.03-0.8 seconds.

The reduction effect of the transmission loss by the annealing of the optical fiber in accordance with fabricating method of the optical fiber of the present invention will be further described along with the examples.

In the following examples, as the optical fiber, there is assumed a single mode fiber doped with Ge same as that in the examples A1-A4. The temperature of the optical fiber at the entrance of the heating furnace is set as Ts=1500°C; and the line speed Vf of the optical fiber and length L of the heating furnace are altered; and thus, there were examined the temperature change, the cooling speed of the optical fiber and the obtained annealing effect. In the constitution and the entry temperature of the optical fiber into the heating furnace as described above, the relaxation time $\tau$ of the optical fiber is as $\tau$ =0.12 seconds (K: approximately 80MPa).

Further, there were calculated the amount of the temperature changes of the optical fiber using the above-described Paek's formula, wherein there are indicated in the table temperature (°C) of the optical fiber at the locations within the heating furnace and at the entrance of the cooling means disposed downstream of the heating furnace, and the cooling speed (°C/second) within the heating furnace. Also, in connection with the annealing effect, in case where the Rayleigh scattering coefficient is reduced by 3% or more as compared with the Rayleigh scattering coefficient occurring in case of annealing not carried out, the annealing effect is determined as successful ("○" in the table); and otherwise, determined as not successful("×" in the table).

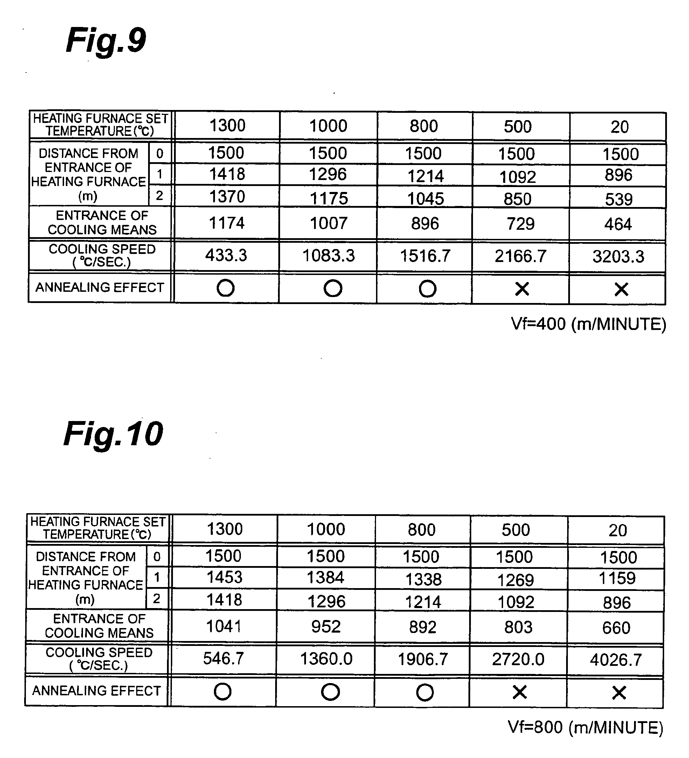

Fig. 9 is a table showing the cooling speed and the annealing effect of the optical fiber when the line speed of the optical fiber is set to Vf=400m/minute. In the example shown in Fig. 9, the length of the heating furnace is set as L=2m; and the distance between the heating furnace and the cooling means is set to 0.3m, and the temperature of the heating furnace is set to 1300°C, 1000°C, 800°C, 500°C, and 20°C. Under the respective conditions, there were examined the temperature changes of the optical fiber and the obtained annealing effects..In this case, the period of annealing time is L/Vf=0.30 seconds; thus, the condition L/Vf≥$\tau$ is satisfied.

Fig. 10 is a table showing the cooling speed and the annealing effect of the optical fiber when the line speed of the optical fiber is set to Vf=800m/minute. In the example shown in Fig. 10, the length of the heating furnace is set as L=2m; and the distance between the heating furnace and the cooling means is set to 1.2m, and the temperature of the heating furnace is set to 1300°C, 1000°C, 800°C, 500°C, and 20°C. Under the respective conditions, there were examined the temperature changes of the optical fiber and the obtained annealing effects. In this case, the period of annealing time is L/Vf=0.15 seconds; thus, the condition L/Vf≥$\tau$ is satisfied.

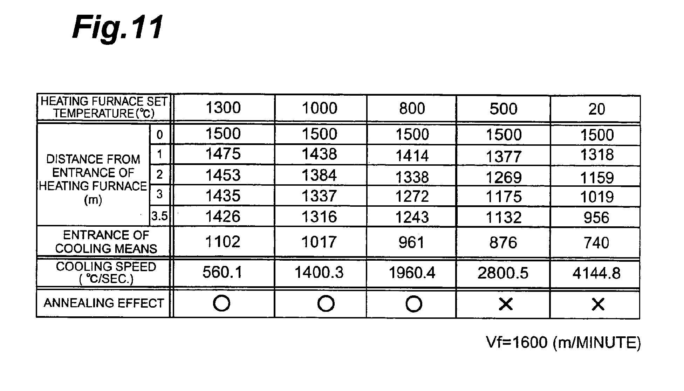

Fig. 11 is a table showing the cooling speed and the annealing effect of the optical fiber when the line speed of the optical fiber is set to Vf=1600m/minute. In the example shown in Fig. 11, the length of the heating furnace is set as L=3.5m; and the distance between the heating furnace and the cooling means is set to 2m, and the temperature of the heating furnace is set to 1300°C, 1000°C, 800°C, 500°C, and 20°C. Under the respective conditions, there were examined the temperature changes of the optical fiber and the obtained annealing effects. In this case, the period of annealing time is L/Vf=0.13 seconds; thus, the condition L/Vf≥$\tau$ is satisfied.

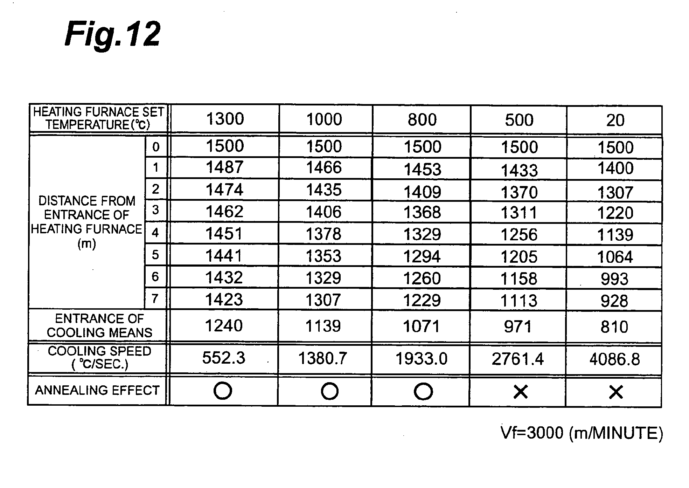

Fig. 12 is a table showing the cooling speed and the annealing effect of the optical fiber when the line speed of the optical fiber is set to Vf=3000m/minute. In the example shown in Fig. 12, the length of the heating furnace is set as L=7m; and the distance between the heating furnace and the cooling means is set to 2m, and the temperature of the heating furnace is set to 1300°C, 1000°C, 800°C, 500°C, and 20°C. Under the respective conditions, there were examined the temperature changes of the optical fiber and the obtained annealing effects. In this case, the period of annealing time is L/Vf=0.14 seconds; thus, the condition L/Vf≥$\tau$ is satisfied.

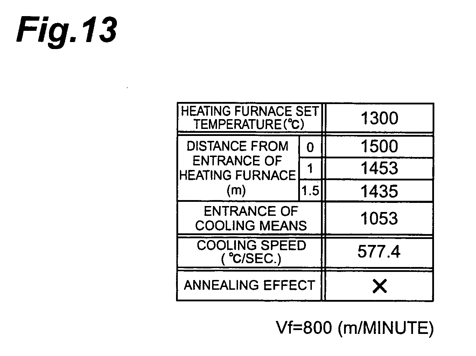

Fig. 13 is a table showing the cooling speed and the annealing effect of the optical fiber when the line speed of the optical fiber is set to Vf=800m/minute. In the example shown in Fig. 13, the length of the heating furnace is set as L=1.5m; and the distance between the heating furnace and the cooling means is set to 1.2m, and the temperature of the heating furnace is set to 1300°C. Under the respective conditions, the temperature changes of the optical fiber and the obtained annealing effects were examined. In this case, the period of annealing time is L/Vf=0.11 seconds, which shorter than the relaxation time $\tau$; thus, the condition L/Vf≥$\tau$ is not satisfied.

As shown in Fig. 9-Fig. 13, in the example shown in Fig. 13, in which the condition L/V f≥$\tau$ with respect to the period of annealing time is not satisfied and the period of annealing time is short, sufficient reduction effect of the Rayleigh scattering coefficient is not obtained. Also, in the examples in Fig. 9-Fig. 12, in which the period of annealing time satisfies the condition L/Vf≥$\tau$, when the cooling speed is faster than 2000°C/second, it is understood that sufficient reduction effect of the Rayleigh scattering coefficient is not obtained likewise.

On the contrary, the Rayleigh scattering coefficient is sufficiently reduced by annealing the optical fiber such that there are satisfied the condition that the cooling speed in the heating furnace is 2000°C/second or less as well as the condition that the period of annealing time L/Vf is equal to the relaxation time $\tau$ or more. Also, the Rayleigh scattering coefficient is to be sufficiently reduced by setting the annealing temperature, which is the set temperature of the heating furnace, to 800°C or more. In these examples also, the effect of the forced cooling of the optical fiber with the cooling means is the same as that in the above-described examples A1-A4 etc.

The optical fiber and the fabricating method thereof in accordance with the present invention are not limited to the above-described embodiments and examples, but various modifications are possible. For example, in connection with the particular constitution of the drawing apparatus, Fig. 1 shows an example thereof. Insofar as practical, there may be used any drawing apparatus having any constitution other than that.

## Industrial Applicability

The optical fiber and the fabricating method thereof in accordance with the present invention there are achieved, as described above in detail, the optical fiber in such a way applicable that the Rayleigh scattering coefficient is reduced and excellent hydrogen-resisting property, as well as the method of fabricating the optical fiber applicable so as to obtain a favorably high productivity. That is, according to the fabricating method of the optical fiber, in the drawing of the optical fiber, the optical fiber is annealed by the heating furnace disposed downstream of the drawing furnace under the condition that the cooling speed is 2000°C/second or less and the period of annealing time is equal to the relaxation time or more, and the optical fiber is introduced into the cooling means downstream of the heating furnace at a temperature of 700°C or more to forcibly cool down the optical fiber, and the optical fiber, in which the Rayleigh scattering loss is reduced and excellent hydrogen-resisting property is provided, can be fabricated with favorably high productivity.

Further, there is achieved the optical fiber with the reduced Rayleigh scattering loss and excellent in favorable hydrogen-resisting property according to the optical fiber including characteristic features that the core region is doped with Ge in such a quantity of dopant that satisfies the condition [Ge]≥0.3%, that the Rayleigh scattering coefficient A and the transmission loss $\alpha_{1.00}$ at a wavelength of 1.00μm are 97% or less respectively with respect to the ordinary reference value $A_0$ and $\alpha_0$, and that the difference in transmission loss $\Delta\alpha_{1.38}$ between before and after hydrogen treatment at a wave a length of 1.38μm is 0.15dB/km or less.

## Claims

1. A fabricating method of an optical fiber comprising the steps of:

   a drawing step wherein an optical fiber preform having a core region and a cladding region formed on the periphery of said core region is heated and drawn with a drawing furnace into an optical fiber;
   a heat treatment step wherein said optical fiber drawn with said drawing furnace is annealed by a heating furnace disposed downstream of said drawing furnace; and
   a cooling step wherein said optical fiber annealed with said heating furnace is introduced with a temperature of fiber at 700°C or more into a cooling means disposed downstream of said heating furnace, and is cooled forcibly by said cooling means,

   wherein in the course of said heat treatment step, said optical fiber is annealed on such annealing conditions that meet the requirements that the cooling speed of said optical fiber is to be 2000°C/second or less, and that the period of annealing time L/Vf is equal to or longer than the relaxation time τ, the length of said heating furnace being designated as L (m), the line speed of said optical fiber being designated as Vf (m/second), the viscosity of said optical fiber at the entrance of said heating furnace being designated as ηS (Pa·second), the tension of said optical fiber per a unit cross sectional area being designated as K (Pa), and the relaxation time thereof being defined as τ=ηS/K.

2. The fabricating method of the optical fiber according to claim 1, wherein, in said heat treatment step, said optical fiber is annealed by said heating furnace at a temperature of 800-1600°C.

3. The fabricating method of the optical fiber according to claim 1, wherein, in said heat treatment step, said optical fiber is annealed by said heating furnace at a temperature of 1100-1600°C.

4. The fabricating method of the optical fiber according to claim 1, wherein, in said cooling step, said optical fiber is introduced into said cooling means at a temperature of 700-1300°C.

5. The fabricating method of the optical fiber according to claim 1, wherein, in said drawing step, said heat treatment step and said cooling step, the line speed of said optical fiber is 300m/minute or more.

6. The fabricating method of the optical fiber according to claim 1, wherein, in said heat treatment step, said optical fiber is annealed by said heating furnace for 0.03-0.8 seconds.

7. The fabricating method of the optical fiber according to claim 1, wherein said core region is doped with Ge in such a quantity of dopant that the relative refractive-index difference [Ge] expressed by % with respect to pure $SiO_2$ satisfies a condition [Ge] ≥0.3%.

8. The fabricating method of the optical fiber according to claim 1, wherein said cladding region has one or more cladding layers comprised of either of pure $SiO_2$, $SiO_2$ doped with Ge or $SiO_2$ doped with F respectively.

9. An optical fiber comprising a core region and a cladding region formed on the periphery of said core region, wherein said core region is doped with Ge in such a quantity of dopant that relative refractive-index difference [Ge] expressed by % with respect to

pure $SiO_2$ satisfies a condition $[Ge] \geq 0.3\%$, the Rayleigh scattering coefficient A (dB/km·μm$^4$) and the transmission loss $\alpha_{1.00}$ (dB/km) at a wavelength of 1.00μm are 97% or less of the reference value $A_0$ and $\alpha_0$ respectively expressed by the following formulas:

$$A_0 = 0.85 + 0.29\,[Ge]$$

$$\alpha_0 = 0.86 + 0.29\,[Ge],$$

and
the difference in transmission loss $\Delta\alpha_{1.38}$ at a wavelength of 1.38μm between before and after hydrogen treatment is 0.15dB/km or less.

10. The optical fiber according to claim 9, wherein said cladding region has one or more cladding layers comprised of either of pure $SiO_2$, $SiO_2$ doped with Ge or $SiO_2$ doped with F respectively.

# *Fig.1*

## Fig.2

# Fig.3

| | HEATING FURNACE ANNEALING TEMPERATURE (°C) | COOLING MEANS ENTRY TEMPERATURE (°C) | TRANSMISSION LOSS @1.55μm (dB/km) | TRANSMISSION LOSS @0.63μm (dB/km) |
|---|---|---|---|---|
| EXAMPLE A1 | 1100 | 700 | 0.185 | 6 |
| EXAMPLE A2 | 1400 | 1000 | 0.180 | 6 |
| EXAMPLE A3 | 1550 | 1200 | 0.182 | 7 |
| EXAMPLE A4 | 1550 | 1300 | 0.182 | 9 |

# Fig.4

| | HEATING FURNACE ANNEALING TEMPERATURE (°C) | COOLING MEANS ENTRY TEMPERATURE (°C) | TRANSMISSION LOSS @1.55μm (dB/km) | TRANSMISSION LOSS @0.63μm (dB/km) |
|---|---|---|---|---|
| COMPARATIVE EXAMPLE B1 | — | 1000 | 0.190 | 12 |
| COMPARATIVE EXAMPLE B2 | — | 500 | 0.190 | 6 |
| COMPARATIVE EXAMPLE B3 | 900 | 500 | 0.189 | 6 |
| COMPARATIVE EXAMPLE B4 | 1100 | 500 | 0.185 | 6 |
| COMPARATIVE EXAMPLE B5 | 1650 | 1300 | 0.188 | 10 |

# Fig.5

# Fig.6

## Fig.7

| | TYPE OF OPTICAL FIBER | CORE REGION Ge QUANTITY OF DOPANT | TRANSMISSION LOSS @1.55 $\mu$ m (dB/km) | INCREASE IN LOSS $\Delta \alpha$ 1.38 (dB/km) |
|---|---|---|---|---|
| EXAMPLE C1 | Ge-SM | $\Delta n_0 =$ 0.35% | 0.180 | 0.05 |
| COMPARATIVE EXAMPLE D1 | | | 0.190 | 0.2 |
| EXAMPLE C2 | DSF | $\Delta n_0 =$ 0.6% | 0.188 | 0.07 |
| COMPARATIVE EXAMPLE D2 | | | 0.200 | 0.3 |
| EXAMPLE C3 | DCF | $\Delta n_0 =$ 1.5% | 0.228 | 0.11 |
| COMPARATIVE EXAMPLE D3 | | | 0.245 | 0.6 |

## Fig.8

| | HEATING FURNACE EXIT | 1m | 2m | — | 3m | 4m | 5m | 6m | 7m |
|---|---|---|---|---|---|---|---|---|---|
| EXAMPLE E | 1499 | 1299 | 1125 | FORCED COOLING | 553 | — | — | — | — |
| COMPARATIVE EXAMPLE F | 1499 | 1299 | 1125 | — | 976 | 846 | 736 | 637 | 554 |

(TEMPERATURE OF OPTICAL FIBER: °C)

## Fig.9

| HEATING FURNACE SET TEMPERATURE (°C) | | 1300 | 1000 | 800 | 500 | 20 |
|---|---|---|---|---|---|---|
| DISTANCE FROM ENTRANCE OF HEATING FURNACE (m) | 0 | 1500 | 1500 | 1500 | 1500 | 1500 |
| | 1 | 1418 | 1296 | 1214 | 1092 | 896 |
| | 2 | 1370 | 1175 | 1045 | 850 | 539 |
| ENTRANCE OF COOLING MEANS | | 1174 | 1007 | 896 | 729 | 464 |
| COOLING SPEED (°C/SEC.) | | 433.3 | 1083.3 | 1516.7 | 2166.7 | 3203.3 |
| ANNEALING EFFECT | | ○ | ○ | ○ | ✕ | ✕ |

Vf=400 (m/MINUTE)

## Fig.10

| HEATING FURNACE SET TEMPERATURE (°C) | | 1300 | 1000 | 800 | 500 | 20 |
|---|---|---|---|---|---|---|
| DISTANCE FROM ENTRANCE OF HEATING FURNACE (m) | 0 | 1500 | 1500 | 1500 | 1500 | 1500 |
| | 1 | 1453 | 1384 | 1338 | 1269 | 1159 |
| | 2 | 1418 | 1296 | 1214 | 1092 | 896 |
| ENTRANCE OF COOLING MEANS | | 1041 | 952 | 892 | 803 | 660 |
| COOLING SPEED (°C/SEC.) | | 546.7 | 1360.0 | 1906.7 | 2720.0 | 4026.7 |
| ANNEALING EFFECT | | ○ | ○ | ○ | ✕ | ✕ |

Vf=800 (m/MINUTE)

## *Fig.11*

| HEATING FURNACE SET TEMPERATURE(℃) | | 1300 | 1000 | 800 | 500 | 20 |
|---|---|---|---|---|---|---|
| DISTANCE FROM ENTRANCE OF HEATING FURNACE (m) | 0 | 1500 | 1500 | 1500 | 1500 | 1500 |
| | 1 | 1475 | 1438 | 1414 | 1377 | 1318 |
| | 2 | 1453 | 1384 | 1338 | 1269 | 1159 |
| | 3 | 1435 | 1337 | 1272 | 1175 | 1019 |
| | 3.5 | 1426 | 1316 | 1243 | 1132 | 956 |
| ENTRANCE OF COOLING MEANS | | 1102 | 1017 | 961 | 876 | 740 |
| COOLING SPEED (℃/SEC.) | | 560.1 | 1400.3 | 1960.4 | 2800.5 | 4144.8 |
| ANNEALING EFFECT | | ○ | ○ | ○ | ✕ | ✕ |

Vf=1600 (m/MINUTE)

## Fig.12

| HEATING FURNACE SET TEMPERATURE(℃) | | 1300 | 1000 | 800 | 500 | 20 |
|---|---|---|---|---|---|---|
| DISTANCE FROM ENTRANCE OF HEATING FURNACE (m) | 0 | 1500 | 1500 | 1500 | 1500 | 1500 |
| | 1 | 1487 | 1466 | 1453 | 1433 | 1400 |
| | 2 | 1474 | 1435 | 1409 | 1370 | 1307 |
| | 3 | 1462 | 1406 | 1368 | 1311 | 1220 |
| | 4 | 1451 | 1378 | 1329 | 1256 | 1139 |
| | 5 | 1441 | 1353 | 1294 | 1205 | 1064 |
| | 6 | 1432 | 1329 | 1260 | 1158 | 993 |
| | 7 | 1423 | 1307 | 1229 | 1113 | 928 |
| ENTRANCE OF COOLING MEANS | | 1240 | 1139 | 1071 | 971 | 810 |
| COOLING SPEED (℃/SEC.) | | 552.3 | 1380.7 | 1933.0 | 2761.4 | 4086.8 |
| ANNEALING EFFECT | | ○ | ○ | ○ | ✕ | ✕ |

Vf=3000 (m/MINUTE)

# Fig.13

| HEATING FURNACE SET TEMPERATURE(°C) | | 1300 |
|---|---|---|
| DISTANCE FROM ENTRANCE OF HEATING FURNACE (m) | 0 | 1500 |
| | 1 | 1453 |
| | 1.5 | 1435 |
| ENTRANCE OF COOLING MEANS | | 1053 |
| COOLING SPEED (°C/SEC.) | | 577.4 |
| ANNEALING EFFECT | | ✗ |

Vf=800 (m/MINUTE)

**EP 1 533 284 A1**

<div align="center">

## INTERNATIONAL SEARCH REPORT

</div>

| | International application No. |
|---|---|
| | PCT/JP03/08788 |

| A. CLASSIFICATION OF SUBJECT MATTER |
|---|
| Int.Cl$^7$  C03B37/12, C03C13/04 |

According to International Patent Classification (IPC) or to both national classification and IPC

| B. FIELDS SEARCHED |
|---|
| Minimum documentation searched (classification system followed by classification symbols) |
| Int.Cl$^7$  C03B37/00-37/16 |

Documentation searched other than minimum documentation to the extent that such documents are included in the fields searched

| Jitsuyo Shinan Koho | 1922-1996 | Toroku Jitsuyo Shinan Koho | 1994-2003 |
|---|---|---|---|
| Kokai Jitsuyo Shinan Koho | 1971-2003 | Jitsuyo Shinan Toroku Koho | 1996-2003 |

Electronic data base consulted during the international search (name of data base and, where practicable, search terms used)
WPI

| C. DOCUMENTS CONSIDERED TO BE RELEVANT | | |
|---|---|---|
| Category* | Citation of document, with indication, where appropriate, of the relevant passages | Relevant to claim No. |
| Y<br>A | EP 1191367 A2  (Sumitomo Electric Industries, Ltd,),<br>27 March, 2002 (27.03.02),<br>Claims; Par. No. [0078]<br>& JP 2002-148466 A<br>Claims; Par. No. [0094]<br>& US 2002-44753 A1 | 9,10<br>7 |
| Y | JP 6-271330 A  (Sumitomo Electric Industries, Ltd.),<br>27 September, 1994 (27.09.94),<br>Par. No. [0005]<br>(Family: none) | 9 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 October, 2003 (10.10.03) | 28 October, 2003 (28.10.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

26

**EP 1 533 284 A1**

<table>
<tr><td colspan="2" align="center">INTERNATIONAL SEARCH REPORT</td><td colspan="2">International application No.<br>PCT/JP03/08788</td></tr>
<tr><td colspan="4">C (Continuation). DOCUMENTS CONSIDERED TO BE RELEVANT</td></tr>
<tr><td>Category*</td><td colspan="2">Citation of document, with indication, where appropriate, of the relevant passages</td><td>Relevant to claim No.</td></tr>
<tr><td>Y<br>A</td><td colspan="2">JP 8-290932 A  (Sumitomo Electric Industries,<br>Ltd.),<br>05 November, 1996 (05.11.96),<br>Par. No. [0040]<br>(Family: none)</td><td>10<br>8</td></tr>
<tr><td>A</td><td colspan="2">EP 1205449 A1  (Sumitomo Electric Industries,<br>Ltd.),<br>15 May, 2002 (15.05.02),<br>Claims; Par. Nos. [0007], [0017]; Figs. 2, 6<br>& JP 2000-335935 A<br>Claims; Par. Nos. [0007], [0023]; examples 1 to 2<br>& WO 73223 A1          & WO 73224 A1<br>& US 2002-59816 A1</td><td>1-10</td></tr>
</table>

Form PCT/ISA/210 (continuation of second sheet) (July 1998)